# EUROPÄISCHE PATENTSCHRIFT

(11) **EP 0 886 569 B1**
(45) Veröffentlichungstag und Bekanntmachung des Hinweises auf die Patenterteilung: **29.09.1999**
(21) Anmeldenummer: 97917928.0
(22) Anmeldetag: 30.04.1997
(51) Int. Cl.: B29B 13/02

(54) **VORRICHTUNG ZUM ERWÄRMEN VON KUNSTSTOFFPROFILEN**
DEVICE FOR HEATING PLASTICS PROFILE SECTIONS
DISPOSITIF POUR CHAUFFER DES PROFILES EN PLASTIQUE

(30) Priorität: 03.05.1996 FR 9605757
(43) Veröffentlichungstag der Anmeldung: 30.12.1998
(73) Patentinhaber: Technoplast Kunststofftechnik Gesellschaft m.b.H., 4563 Micheldorf (AT)
(72) Erfinder: HUGUET, Pierre, F-27000 Evreux (FR)
(74) Vertreter: Babeluk, Michael, Dipl.-Ing. Mag., Patentanwälte Babeluk - Krause
(86) Internationale Anmeldenummer: AT9700084
(87) Internationale Veröffentlichungsnummer: WO9742014

(56) Entgegenhaltungen:
- CH-A- 553 046
- DE-A- 2 915 773
- DE-B- 1 131 869
- DE-B- 1 166 451
- FR-A- 2 345 278
- US-A- 3 184 796
- US-A- 3 466 020
- US-A- 3 554 506
- US-A- 3 706 824
- PATENT ABSTRACTS OF JAPAN vol. 013, no. 320 (M-853), 20.Juli 1989 & JP 01 108020 A (MITSUBISHI PLASTICS IND LTD), 25.April 1989,

## Beschreibung

Die vorliegende Erfindung betrifft eine Vorrichtung zum Erwärmen von Kunststoffprofilen, insbesonders zum Erwärmen von Profilen aus PVC, mit einem Kasten zur Aufnahme des Profils, der eine Auflageplatte, Seitenwände und einen Deckel aufweist, sowie mit Mitteln, um heiße Luft an einer Stirnseite des Profils zuzuführen, und diese innerhalb und außerhalb des Profils vorbeiströmen zu lassen.

Kunststoffprofile werden üblicherweise durch Extrusion eines PVC-Materials hergestellt. Für bestimmte Anwendungen ist es notwendig, diese Profile zu biegen, um Rundungen u. dgl. auszubilden. Solche Vorgänge sind bei der Herstellung von Türen und Fenstern häufig vorkommend. Die Formänderung wird durchgeführt, nachdem das Profil auf eine geeignete Temperatur erwärmt worden ist. Um diese Erwärmung durchzuführen sind Vorrichtungen bekannt, bei denen das Profil in einem Ölbad auf eine Temperatur von etwa 125°C erwärmt wird. Die Erwärmung in einer solchen Vorrichtung geht schnell vor sich, jedoch ist die nachher erforderliche Reinigung des Profils von dem Öl schwierig und aufwendig. Daher versucht man die Verwendung von solchen Erwärmungsvorrichtungen zu vermeiden.

Weiters ist aus der DE-B 11 66 451 eine Vorrichtung zur Erwärmung von Kunststoffprofilen: bekannt, bei der heiße Luft in ein Profil eingeblasen und daran vorbeigeführt wird. Es werden dabei verschiedene Luftkanäle und Strömungshindernisse verwendet, um spezielle Teile des Profils bevorzugt zu erwärmen. Eine solche Vorrichtung ist aufwendig, und sie bedingt einen großen Energieeinsatz.

Weiters ist aus der JP-A-10108020 das Erwärmen eines Rohres bekannt, bei dem die heiße Luft nach dem Durchströmen des Rohrinneren abgerogen, erwärmt und wieder in das Rohrinnere zurüchgeführt wird.

Weiters ist aus der US-A 3 706 824 eine Vorrichtung zum Erwärmen von Rohrabschnitten bekannt, um diese zu biegen. Dabei werden in das Rohr Heizvorrichtungen eingeführt, um dieses von innen zu erwärmen. Eine solche Vorrichtung ist für Profile mit komplizierterem Querschnitt nicht anwendbar.

Aufgabe der vorliegenden Erfindung ist es, diese Nachteile zu vermeiden, und eine Vorrichtung zu schaffen, die eine schnelle und wirksame Erwärmung mit möglichst geringem Aufwand ermöglicht und die dennoch in ihrem Aufbau einfach und kostengünstig ist.

Erfindungsgemäß wird dies dadurch erreicht, daß ein Rückführkanal zur Rückführung und Wiedererwärmung der Luft vorgesehen ist, nachdem diese das Profil durchströmt hat, um einen geschlossenen Luftkreislauf zu bilden. Durch die erfindungsgemäße Ausbildung ergibt sich ein kompakter Aufbau, und es werden Wärmeverluste fast vollständig verhindert. Der Energieeinsatz kann daher sehr gering gehalten werden.

Vorzugsweise ist vorgesehen, daß der Rückführkanal, ein Heizelement und vorzugsweise ein Ventilator unterhalb der Auflageplatte in dem Kasten angeordnet sind. Auf diese Weise ergibt sich eine besonders kompakte Ausbildung der Vorrichtung.

Die Bedienung der Vorrichtung, und zwar insbesonders das Einlegen und Entnehmen der zu erwärmenden Profile kann dadurch vereinfacht werden, daß die Auflageplatte zum Anheben ausgebildet ist.

Besonders günstig ist es dabei, wenn der Kasten an seiner Oberseite einen nach oben zu öffnenden Deckel und eine Arbeitsfläche aufweist. Auf diese Weise kann der Biegevorgang unmittelbar nach dem Anheben des Profils direkt auf der Vorrichtung selbst durchgeführt werden.

Weiters betrifft die Erfindung ein Verfahren zum Erwärmen von Kunststoffprofilen, vorzugsweise Profilen aus PVC, bei dem heiße Luft innerhalb und außerhalb des Profils in Längsrichtung vorbeigeführt wird. Dieses Verfahren ist dadurch gekennzeichnet, daß die Luft im Kreislauf geführt wird.

In der Folge wird die Erfindung anhand der in den Figuren dargestellten Ausführungsvarianten näher erläutert. Es zeigen:

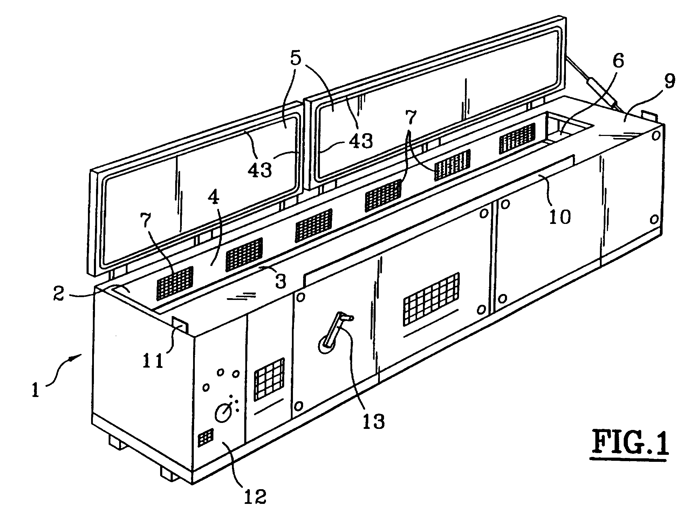

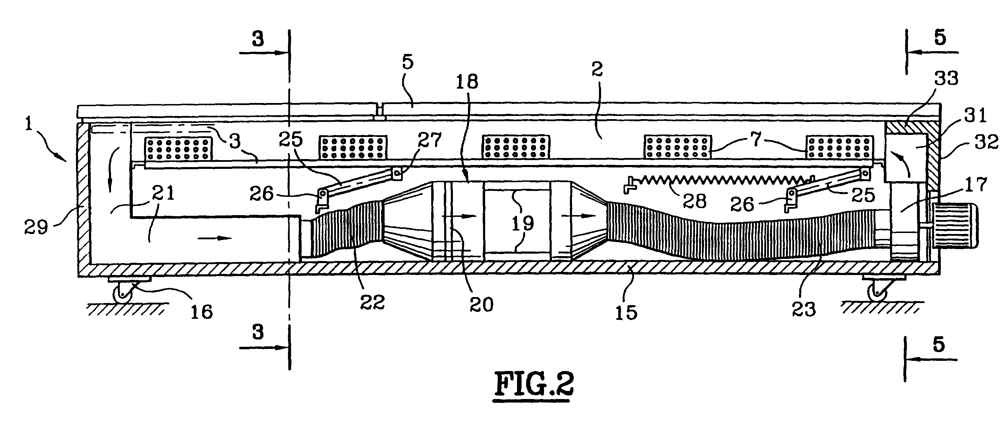

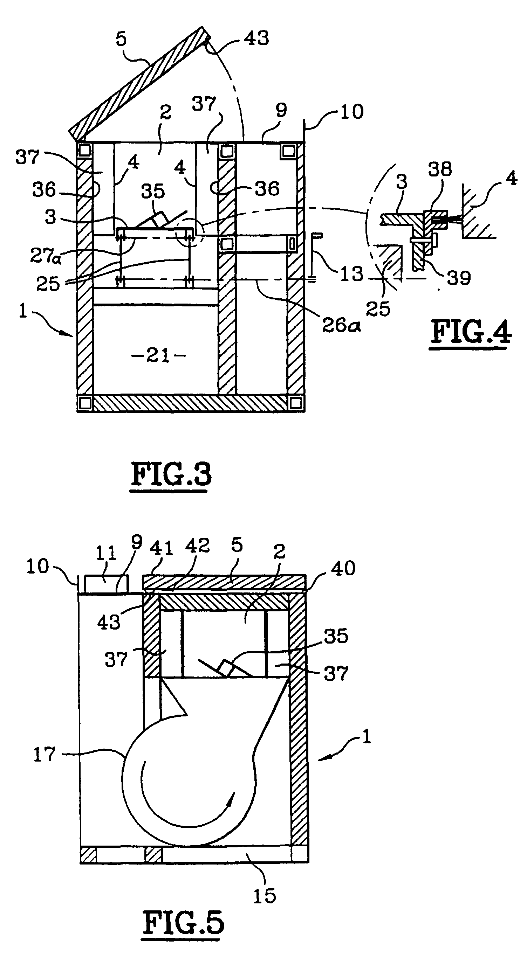

Die Fig. 1 eine axonometrische Gesamtansicht der erfindungsgemäßen Vorrichtung, die Fig. 2 einen Längsschnitt der Vorrichtung, die Fig. 3 einen Schnitt nach der Linie III-III in Fig. 2, die Fig. 4 ein Detail von Fig. 3 und die Fig. 5 einen Schnitt nach der Linie V-V von Fig. 2.

Die Vorrichtung besteht aus einem länglichen Kasten 1, der dazu ausgebildet ist, ein zu erwärmendes Kunststoffprofil 35 aufzunehmen. Um an die verschiedenen Längen der zu erwärmenden Profile angepaßt zu sein, kann der Kasten 1 eine Länge von 4 m oder mehr aufweisen.

Der Kasten 1 ist im wesentlichen parallelepipedisch ausgebildet und enthält in seinem Inneren einen Erwärmungsraum 2, der nach unten hin durch eine Auflageplatte 3 abgeschlossen ist, die eine Auflage für die zu erwärmenden Profile 35 bildet. Nach oben hin ist der Kasten 1 durch einen Deckel 5 abgeschlossen, der in zwei Teilen aufgeklappt werden kann, wie dies in der Fig. 1 gezeigt ist. Seitlich ist der Erwärmungsraum 2 durch Seitenwände 4 begrenzt.

Der Erwärmungsraum 2 besitzt an einer Stirnseite eine Öffnung 6, um einen Strom heißer Luft zuzuführen und an der gegenüberliegenden Seite eine Öffnung, um die Luft nach dem Vorbeiströmen an dem Profil 35 abzuziehen.

Aus der Fig. 1 ist weiters ersichtlich, daß die Seitenwände 4 Öffnungen oder Gitter 7 aufweisen, die eine seitliche Zufuhr von heißer Luft auf die Seiten des zu erwärmenden Profils 35 ermöglichen.

Die Auflageplatte 3 ist in vertikaler Richtung beweglich, um das Einlegen und Entnehmen des Profils 35 zu erleichtern. An der Oberseite des Kastens ist eine Arbeitsfläche 9 vorgesehen, die einen Teil der oberen Begrenzung des Kastens 1 darstellt. Ein Vorsprung 10 begrenzt die Arbeitsfläche 9 zur Vorderseite hin, was eine Sicherheitsmaßnahme darstellt. Ein weiterer Vorsprung 11 an der Stirnseite der Vorrichtung dient zum Halten der Profile 35 nach dem Erwärmen, um Arbeitsvorgänge zu erleichtern.

Um ein zu schnelles Abkühlen der erwärmten Profile 35 zu verhindern, die auf der Arbeitsfläche 9 liegen, kann diese durch einen Strom heißer Luft erwärmt werden, der zwischen dem Deckel 5 und der Arbeitsfläche 9 hindurchgeführt wird.

An einer Vorderseite des Kastens 1 sind auf einer Schalttafel 12 Anzeige- und Steuerungselemente angeordnet. Weiters ist eine Kurbel 13 vorgesehen, um die Auflageplatte 3 anzuheben oder abzusenken. Aus dem Längsschnitt der Fig. 2 ist ersichtlich, daß der Kasten 1 nach außen hin isoliert ist. Eine Bodenplatte 15 ist auf Rollen 16 gelagert. Auf der Bodenplatte 15 ist in der Nähe einer Stirnseite des Kastens 1 ein Ventilator 17 angeordnet, der so ausgelegt ist, daß er Luft mit einer Geschwindigkeit in der Größenordnung von 20 bis 30 m/sec durch den Kasten 1 fördern kann.

In einem Heizelement 18, das ebenfalls auf der Bodenplatte 15 befestigt ist, befindet sich eine Mehrzahl von elektrischen Widerständen 19. Es werden beispielsweise zwölf Widerstände je 1 kW verwendet.

Stromaufwärts der Widerstände 19 ist ein Metallfilter 20 vorgesehen, um etwaige Verunreinigungen der Luft auszuscheiden. Der Kreislauf der Luft wird geschlossen, indem die Luft nach dem Vorbeiströmen an dem Profil 35 zunächst in einem starten Rückführkanal 21 gesammelt wird und danach in einem flexiblen Schlauch 22 dem Filter 20 zugeführt wird. Ein weiterer flexibler Schlauch 23 führt die Luft vom Heizelement 18 zum Ventilator 17.

Die Auflageplatte 3, auf der die zu erwärmenden Profile 35 aufgelegt werden, ist in vertikaler Richtung beweglich. In der Fig. 2 ist sie in der abgesenkten Stellung dargestellt, die der normalen Stellung entspricht, die während des Erwärmens der Profile 35 eingenommen wird. Die Auflageplatte 3 bildet die Unterseite des Erwärmungsraumes 2. Sie wird von Hebeln 25 getragen, die an einem Ende über Lager 26 am Kasten 1 abgestützt sind. An ihrem anderen Ende sind Lager 27 vorgesehen, die Hebel 25 mit der Auflageplatte 3 verbindend. Durch ein Schwenken in der Richtung gegen den Uhrzeigersinn in der Fig. 2 wird ein Anheben der Auflageplatte 3 bewirkt. Eine Feder 28 spannt die Hebel 25 in dieser Richtung vor. Durch die Hebel 25 wird eine Parallelogrammführung für die Auflageplatte 3 gebildet. Die Achsen 26a der Lager 26 und die Achsen 27a der Lager 27 sind horizontal und parallel zueinander. Über ein nicht dargestelltes Getriebe ist die Kurbel 13 mit den Hebeln 25 verbunden, um diese zu verschwenken. Alternativ dazu ist selbstverständlich auch ein motorischer Antrieb der Hebelvorrichtung möglich.

In der angehobenen Stellung liegt eine Vorderseite der Auflageplatte 3 an einer Stirnwand 29 des Kastens 1 an, wie dies in der Fig. 2 mit unterbrochenen Linien angedeutet ist. Dadurch wird der Kasten 1 auch bei geöffneten Deckeln 5 nach oben hin abgeschlossen und es wird ein Verlust durch das Ausströmen von heißer Luft vermieden. In der angehobenen Stellung ist die Oberseite der Auflageplatte 3 bündig mit der Arbeitsfläche 9, so daß die Profile 35 leicht manipuliert werden können.

Über dem Ventilator 17 ist ein Umlenkkasten 31 für die heiße Luft ausgebildet, der von einer Stirnwand 32 und einer oberen Wand 33 gebildet ist. Die Wände 32 und 33 sind thermisch isoliert.

In der Fig. 3 ist der Kasten 1 in einem Schnitt dargestellt, wobei die Auflageplatte 3 abgesenkt ist, der Deckel 5 jedoch in der geöffneten Stellung dargestellt ist. Es ist ersichtlich, daß der Erwärmungsraum 2 seitlich durch Seitenwände 4 begrenzt ist. Der Erwärmungsraum 2 kann dabei etwa einen Querschnitt von 200 mm mal 200 mm aufweisen. Zwischen den Seitenwänden 4 und isolierten Wänden 36 des Kastens 1 sind Strömungskanäle 37 für heiße Luft ausgebildet, die die Gitter 7 versorgen. Diese Strömungskanäle 37 können beispielsweise einen Querschnitt von 200 mm mal 50 mm aufweisen.

In der Fig. 4 ist ein Detail von Fig. 3 dargestellt. Es ist ersichtlich, daß die Auflageplatte 3 an ihren Seiten Dichtungen 38 aufweist, die an einem Flansch 39 befestigt sind. Die Dichtungen 38 dienen dazu, einen Ausströmverlust der heißen Luft zwischen der Auflageplatte 3 und der Seitenwand 4 zu verhindern.

Die Fig. 5 zeigt einen Querschnitt durch den Kasten 1 im Bereich seiner Stirnseite. Der Deckel 5 ist dabei in geschlossenem Zustand gezeigt. Der Deckel 5 ist auf einem Scharnier 40 schwenkbar gelagert. Auf der dem Scharnier 40 gegenüberliegenden Seite 41 des Deckels 5 ist an seiner Unterseite eine Dichtung 43 ausgebildet, die den Deckel 5 gegenüber der Arbeitsfläche 9 abdichtet. Durch die Dicke der Dichtung 43 wird zwischen dem Deckel 5 und der Arbeitsfläche 9 ein Spalt 42 gebildet, der von heißer Luft durchströmt wird. Dadurch wird die Arbeitsfläche 9 zusätzlich beheizt, da sich die Wärme über die gesamte Breite der Arbeitsfläche hin 9 ausbreitet.

Die Strömung der heißen Luft innerhalb des Erwärmungsraumes 2 wird mit einer großen Geschwindigkeit gemaß einem Arbeitszyklus durchgeführt, der von dem Typ der zu erwärmenden Profile 35 abhängt.

Der Arbeitszyklus dauert mehrere Minuten. Während des Beginns des Zyklus, wird die Temperatur auf deinen Wert gebracht, der zwischen 5 % und 15 % oberhalb der normalen Erwärmungstemperatur liegt. Während des normalen Erwärmens der Profile 35 verwendet man beispielsweise drei Viertel der elektrischen Widerstände 19, während man am Beginn des Zyklus alle der Widerstände 19 verwendet.

Die Temperatur der Luft während des normalen Erwärmens beträgt beispielsweise 150°C.

Die Mittel zum Erwärmen der Luft bestehen aus elektrischen Widerständen oder aus anderen geeigneten Einrichtungen.

## Patentansprüche

1. Vorrichtung zum Erwärmen von Kunststoffprofilen, insbesonders zum Erwärmen von Profilen aus PVC, mit einem Kasten (1) zur Aufnahme des Profils (35), der eine Auflageplatte (3), Seitenwände (4) und einen Deckel (5) aufweist, sowie mit Mitteln, um heiße Luft an einer Stirnseite des Profils (36) zuzuführen, und diese innerhalb und außerhalb des Profils (35) vorbeiströmen zu lassen, **dadurch gekennzeichnet**, daß ein unterhalb der Auflageplatte (3) angeordneter Rückführkanal (21, 22, 23) zur Rückführung und Wiedererwärmung der Luft vorgesehen ist, nachdem diese das Profil (35) durchströmt bzw. umströmt hat, um einen geschlossenen Luftkreislauf zu bilden, und daß der Rückführkanal (21, 22 23) an den beiden Stirnseiten des Kastens (1) mit dem Raum oberhalb der Auflageplatte (3) verbunden ist.

2. Vorrichtung nach Anspruch 1, **dadurch gekennzeichnet**, daß der Rückführkanal (21, 22, 23) ein Heizelement (18) und vorzugsweise ein Ventilator (17) unterhalb der Auflageplatte (3) in dem Kasten (1) angeordnet sind.

3. Vorrichtung nach Anspruch 1 oder 2, **dadurch gekennzeichnet**, daß die Auflageplatte (3) zum Anheben ausgebildet ist.

4. Vorrichtung nach einem der Ansprüche 1 bis 3, **dadurch gekennzeichnet**, daß der Kasten (1) an seiner Oberseite einen nach oben zu öffnenden Deckel (5) und eine Arbeitsfläche (9) aufweist.

5. Vorrichtung nach Anspruch 3 und 4, **dadurch gekennzeichnet**, daß die Auflageplatte (3) zwischen einer abgesenkten Stellung, in der das zu erwärmende Profil (35) vollständig in dem Kasten (1) angeordnet ist, und einer angehobenen Stellung bewegbar ist, in der die Auflageplatte (3) in einer Ebene mit der Arbeitsfläche (9) liegt.

6. Vorrichtung nach einem der Ansprüche 1 bis 5, **dadurch gekennzeichnet**, daß in den Seitenwänden (4) des Kastens (1) Ausströmöffnungen (7) vorgesehen sind, um heiße Luft auf das Profil (35) zu richten.

7. Vorrichtung nach einem der Ansprüche 1 bis 6, **dadurch gekennzeichnet**, daß das Heizelement (18) aus elektrischen Widerständen (19) besteht.

8. Vorrichtung nach einem der Ansprüche 1 bis 7, **dadurch gekennzeichnet**, daß ein Metallfilter (20) im Kasten (1) vorgesehen ist, um die rückgeführte Luft zu reinigen.

9. Vorrichtung nach einem der Ansprüche 1 bis 8, **dadurch gekennzeichnet,** daß ein Ventilator (17) vorgesehen ist, der dazu ausgelegt ist, die Luft in dem Kasten (1) mit einer Durchschnittsgeschwindigkeit von 20 bis 30 m/s zu fördern.

10. Vorrichtung nach einem der Ansprüche 1 bis 9, **dadurch gekennzeichnet**, daß Mittel vorgesehen sind, um einen heißen Luftstrom an der Arbeitsfläche (9) entlangzuführen. um diese zu beheizen.

11. Vorrichtung nach einem der Ansprüche 3 bis 10, **dadurch gekennzeichnet**, daß die Auflageplatte (3) in ihrer angehobenen Stellung den Kasten (1) im wesentlichen dicht nach oben abschließt.

12. Verfahren zum Erwärmen von Kunststoffprofilen, vorzugsweise Profilen aus PVC, bei dem heiße Luft innerhalb und außerhalb des Profils (35) in Längsrichtung vorbeigeführt wird, **dadurch gekennzeichnet**, daß die Luft im Kreislauf geführt wird und daß die Luft zu Beginn eines Erwärmungszyklus auf eine Temperatur gebracht wird, die etwa 5 bis 15 % oberhalb der Temperatur liegt, die während des Erwärmungszyklus eingestellt ist.

## Claims

1. Device for heating plastics sections, in particular sections made of PVC, comprising a cabinet (1) to accommodate a section (35), which cabinet (1) has a supporting plate (3), side walls (4) and a cover (5), as well as means for introducing hot air at one end of the section (35), so that it can flow past on the inside and outside of the section (35), **characterized in that** a return duct (21, 22, 23) is provided below the supporting plate (3) for the purpose of recirculating and reheating the air after it has passed the section (35) on the inside and outside, in order to form a closed air circuit, and that said return duct (21, 22, 23) is connected on the two short ends of the cabinet (1) with the space above the supporting plate (3).

2. Device as claimed in Claim 1, **characterized in that** the return duct (21, 22, 23), a heating element (18) and preferably a fan (17) are arranged in the cabinet (1), below the supporting plate (3).

3. Device as claimed in Claim 1 or 2, **characterized in that** the supporting plate (3) is designed so as to be liftable.

4. Device as claimed in any of Claims 1 to 3, **characterized in that** the cabinet (1) is provided on its upper side with an upwardly opening cover (5) and a working surface (9).

5. Device as claimed in Claims 3 and 4, **characterized in that** the supporting plate (3) is movable, i.e., between a lowered position in which the section (35) to be heated is entirely positioned within the cabinet (1), and a lifted position, in which the supporting plate (3) is in the same plane with the working surface (9).

6. Device as claimed in any of Claims 1 to 5, **characterized in that** the side walls (4) of the cabinet (1) are provided with discharge openings (7) directing hot air onto the section (35).

7. Device as claimed in any of Claims 1 to 6, **characterized in that** the heating element (18) comprises electric resistors (19).

8. Device as claimed in any of Claims 1 to 7, **characterized in that** a metal filter (20) is provided in the cabinet (1) to clean the recirculated air.

9. Device as claimed in any of Claims 1 to 8, **characterized in that** a fan (17) is provided, which is dimensioned so as to move air through the cabinet (1) at an average rate of 20 to 30 m/sec.

10. Device as claimed in any of Claims 1 to 9, **characterized in that** means are provided for conducting a hot air stream along the working surface (9) in order to heat said working surface (9).

11. Device as claimed in any of Claims 3 to 10, **characterized in that** the supporting plate (3) in its lifted position will essentially seal the cabinet (1) towards the top.

12. Process for heating plastics sections, preferably sections made of PVC, where hot air is passed in longitudinal direction along the inside and outside of a section (35), **characterized in that** the air is conducted in a closed loop and that the air temperature at the beginning of a heating cycle is raised to a level lying about 5 to 15 percent above the standard temperature prevailing during the heating cycle.

## Revendications

1. Dispositif pour chauffer des profilés en matière synthétique, en particulier pour chauffer des profilés en PVC, comprenant, pour loger le profité (35), une caisse (1) qui présente une plaque de base (3), des parois latérales (4) et un couvercle (5) ainsi qu'un moyen pour amener de l'air chaud sur un côté frontal du profité (36) et le faire circuler à l'intérieur et à l'extérieur du profilé (35), caractérisé en ce qu'il est prévu un canal de retour (21, 22, 23) sous la plaque de base (3) pour le retour et le réchauffement de l'air après qu'il ait circulé à l'intérieur et autour du profilé (35), de manière à former un circuit fermé d'air et en ce que le canal de retour (21, 22, 23) communique sur les deux côtés frontaux de la caisse (1) avec l'espace situé au dessus de la plaque de base (3).

2. Dispositif selon la revendication 1, caractérisé en ce que le canal de retour (21, 22, 23) possède un élément de chauffage (18) et, de préférence, un ventilateur (17) disposé dans la caisse (1) en dessous de la plaque de base (3).

3. Dispositif selon la revendication 1 ou 2, caractérisé en ce que la plaque de base (3) est réalisée pour pouvoir être soulevée.

4. Dispositif selon l'une des revendications 1 à 3, caractérisé en ce que la caisse (1) présente sur son côté supérieur un couvercle (5) s'ouvrant vers le haut et une surface (9) de travail.

5. Dispositif selon les revendications 3 et 4, caractérisé en ce que la plaque de base (3) est déplaçable entre une position basse, dans laquelle le profilé (35) à chauffer est entièrement dans la caisse (1) et une position haute dans laquelle la plaque de base (3) se trouve dans le même plan que la surface de travail (9).

6. Dispositif selon l'une des revendications 1 à 5, caractérisé en ce que dans les parois latérales (4) de la caisse (1), il est prévu des orifices (7) de sortie pour diriger de l'air chaud sur le profilé (35).

7. Dispositif selon l'une des revendications 1 à 6, caractérisé en ce que l'élément de chauffage (18) est composé de résistances électriques (19).

8. Dispositif selon l'une des revendications 1 à 7, caractérisé en ce qu'un filtre métallique (20) est prévu dans la caisse (1) pour purifier l'air de retour.

9. Dispositif selon l'une des revendications 1 à 8, caractérisé en ce qu'un ventilateur (17) est prévu et disposé pour faire avancer l'air dans la caisse (1) à une vitesse moyenne de 20 à 30 m/s.

10. Dispositif selon l'une des revendications 1 à 9, caractérisé en ce que des moyens sont prévus pour diriger le flux d'air chaud le long de la surface de travail (9), afin de réchauffer celle-ci.

11. Dispositif selon l'une des revendications 3 à 10, caractérisé en ce que, dans sa position haute, la plaque de base(3) ferme pratiquement hermétiquement la caisse (1) en haut.

12. Procédé pour chauffer des profilés en matière synthétique, de préférence des profilés en PVC, dans lequel de l'air chaud est mené longitudinalement par l'intérieur et l'extérieur du profilé (35), caractérisé en ce que l'air circule en circuit fermé et en ce que l'air au début d'un cycle de chauffage est amené à une température qui est supérieure par environ 5 à 15 % à la température mise en oeuvre durant le cycle de chauffage.
